# EUROPÄISCHE PATENTSCHRIFT

(11) **EP 2 159 508 B1**
(45) Veröffentlichungstag und Bekanntmachung des Hinweises auf die Patenterteilung: **25.02.2015**
(21) Anmeldenummer: 08014790.3
(22) Anmeldetag: 20.08.2008
(51) Int. Cl.: F24J 2/52

(54) **Verfahren zur Herstellung eines Dachhakens**
Process for manufacturing a roof hook
Procédé de fabrication d'un crochet de toit

(43) Veröffentlichungstag der Anmeldung: 03.03.2010
(73) Patentinhaber: Langnickel, Michael, 91325 Adelsdorf (DE)
(72) Erfinder: Langnickel, Michael, 91325 Adelsdorf (DE)
(74) Vertreter: Salleck, Michael

(56) Entgegenhaltungen:
- DE-B3-102005 043 957
- DE-U1- 8 406 502
- DE-U1-202004 003 001
- DE-U1-202006 008 669
- DE-U1-202007 011 725
- JP-A- 2005 098 094
- US-A1- 2005 155 315

## Beschreibung

Die Erfindung bezieht sich auf ein Verfahren nach dem Oberbegriff des Anspruchs 1 bzw. auf einen durch ein erfindungsgemäßes Verfahren hergestellten Dachhaken gemäß den Ansprüchen 2 bis 12.

Dachhaken sind in einer Vielzahl verschiedener Ausführungsformen aus dem Stand der Technik bekannt. Die Dachhaken dienen beispielsweise der Befestigung von Solaranlagenmodulen, wobei der Dachhaken über einen Befestigungsabschnitt mittel-oder unmittelbar an einem Dachelement, beispielsweise an einem Dachsparren, einer Dachlatte oder ähnlichem Dachunterkonstruktionstell befestigt werden kann. Ferner weist der Dachhaken zumeist einen beispielsweise über den Dachziegel ragenden Halteabschnitt auf, wobei am Halteabschnitt mittel- oder unmittelbar das Solaranlagenmodul befestigt werden kann.

Der zumeist als Schweißkonstruktion ausgebildete Dachhaken weist zumeist neben dem Befestigungsabschnitt und dem Halteabschnitt einen Übergangsabschnitt auf, wobei der Übergangsabschnitt zwischen dem Befestigungsabschnitt und dem Halteabschnitt angeordnet ist. Beispielsweise ist der Übergangsabschnitt stegartig ausgebildet und mittels Schweißverfahren mit zumindest dem Befestigungsabschnitt und/oder dem Halteabschnitt verbunden. Bereiche des Übergangsabschnitts können beispielsweise auch den Halteabschnitt definieren, so dass in diesem Falle kein separater Halteabschnitt vorgesehen ist.

Ferner sind Dachhaken bekannt, die aus einem Stück beispielsweise aus Edel- oder Baustahl gefertigt sind.

Nachteilig an den aus dem Stand der Technik bekannten Dachhaken ist jedoch, dass nach erfolgter Montage der Soleranlage je nach Belastung beispielsweise durch starken Schneefall und damit einhergehender Schneebelastung beispielsweise durch Schneeablagerung auf der Solaranlage und/oder starke Windbelastung, eine Verformung des Dachhakens, insbesondere im Bereich der Schweißstellen, beispielsweise im Verbindungsbereich zwischen Übergangsabschnitt und Befestigungsabschnitt, entstehen kann. Unter Verformung kann jede Veränderung angesehen werden, die sich beispielsweise auf eine Winkelveränderung (beispielsweise beträgt der Winkel des Befestigungsabschnitts zum angesetzten Übergangsabschnitt ursprünglich nahezu 90°) im Verbindungsbereich zwischen beispielsweise Übergangsabschnitt und Befestigungsabschnitt und/oder Übergangsabschnitt und Halteabschnitt bezieht.

Eine Verformung des Dachhakens kann jedoch auch während der Montage, beispielsweise durch eine Gewichts- oder Trittbelastung des Monteurs, erfolgen. Selbstverständlich sind auch Verformungen an anderen Stellen und Bereichen des Dachhakens oder zumindest eines Bestandsteiles des Dachhakens möglich.

Im ungünstigsten Fall besteht somit die Gefahr, dass das montierte Solaranlagenmodul bei zusätzlicher Belastung, in Richtung der Dachziegel absackt, was eine Beschädigung der Dachstruktur beziehungsweise einzelner (zumindest der unter den Haken liegenden) Dachziegel zur Folge haben kann.

Aus der DE 20 2004 003 001 U1 geht ein Dachhaken für Solar- und Kollektormodule von Photovoltaik- und Solarthermie-Anlagen hervor, wobei sich der Dachhaken aus einem Befestigungsabschnitt, einem Halteabschnitt, sowie einem zwischenliegenden Übergangsabschnitt zusammensetzt. Der Übergangsabschnitt ist dabei an dem Befestigungsabschnitt angeschweißt.

Des Weiteren offenbart die JP 2005 098094 A einen Dachhaken mit einem Befestigungsabschnitt und einem Halteabschnitt, wobei zudem Versteifungselemente zur Verbesserung der Steifigkeit des Dachhakens vorgesehen sind.

Ausgehend von diesem Stand der Technik besteht die Aufgabe der vorliegenden Erfindung darin, ein Verfahren zur Herstellung eines Dachhakens zu schaffen, bei welchem im Vergleich zum Stand der Technik die Herstellkosten gesenkt sind.

Diese Aufgabe wird durch ein Verfahren mit den Merkmalen des Anspruchs 1, sowie durch einen Dachhaken mit den Merkmalen des Anspruchs 2 gelöst.

Vorteilhafte Ausführungsformen der Erfindung sind in weiteren Ansprüchen definiert.

Die Erfindung betrifft ein Verfahren zur Herstellung eines Dachhakens, wobei das bei der Herstellung der Ausnehmung entstandene Restmaterialstück und/oder ein bei der Herstellung des Dachhakens bzw. bei der Herstellung eines der Bestandsteile des Dachhakens entstandene Restmaterialstück das Versteifungselement bildet. Das entstandene Restmaterialstück kann im Wesentlichen ohne zusätzliche Nachbearbeitung als Versteifungselement verwendet werden und mittels Schweißverfahren an den zu versteifenden Bereich befestigt werden. Gegebenenfalls kann das Versteifungselement noch durch entsprechende Biege- oder Umformmaßnahmen an entsprechende Bereiche (Ecken, Wölbungen, Rundungen etc.) angepasst werden. Durch die Verwendung von Restmaterialstücken als Versteifungselement können die entstehenden Kosten zur Herstellung des Dachhakens gesenkt werden.

Der erfindungsgemäße Dachhaken ist dadurch gekennzeichnet, dass am Dachhaken zumindest ein Versteifungselement vorgesehen ist, wobei das Versteifungselement mittels Schweißverfahren mit dem Dachhaken verbunden ist. Bevorzugt jedoch keinesfalls zwingend kann das Versteifungselement in der Art einer Rippe, eines Steges oder einer Verstrebung oder dergleichen ausgebildet sein. Beispielsweise kann es sich bei dem Versteifungselement um ein irgendwie geartetes Materialstück, beispielsweise mit einem drei-, vier- oder rechteckig oder runden Querschnitt handeln, welches sich zumindest bereichsweise über Bereiche des Befestigungsabschnitts und/oder Halteabschnitts und/oder eines gegebenenfalls vorgesehenen Übergangsabschnitts erstreckt. Das Versteifungselement kann gerade oder schräg, vollständig oder teilweise verschweißt oder vollständig bzw. teilweise anliegend am jeweiligen Bestandsteil des Dachhakens verlaufen. Das Versteifungselement kann eine nahezu beliebige Form und Ausgestaltung aufweisen, solange gewährleistet wird, dass die Steifigkeit und Stabilität des Dachhakens infolge des Anbringens des zumindest einen Versteifungselements erhöht wird. Das zumindest eine Versteifungselement bewirkt somit eine geringere Verformung im elastischen Bereich des Dachhakens bzw. des Materials und vergrößert materialwertemäßig den elastischen Bereich durch Erhöhung des maximalen Belastungswertes des Dachhakens bis zum Eintritt des unwiderruflichen Schadens (Beginn der plastischen Verformung).

Ein weiterer Vorteil besteht darin, dass durch das Anbringen des zumindest einen Versteifungselements die Materialstärke des Dachhakens bzw. der einzelnen Bestandsteile (beispielsweise des Befestigungsabschnitts, des Halteabschnitts und gegebenenfalls des Übergangsabschnitts) verringert werden kann, bei gleichzeitig steigenden Belastungswerten.

Die Anzahl der tatsächlich vorzusehenden Versteifungselemente bzw. deren genaue Ausgestaltung kann bau- oder kundenseitig variieren oder angepasst werden. Beispielsweise kann sich die Anzahl, Länge und Ausgestaltung der einzelnen Versteifungselemente nach den gegebenenfalls an den Dachhaken zu befestigenden zusätzlichen Systemteilen wie etwa Tragschienen, Modulen und/oder Kollektoren oder dergleichen richten.

Ein weiterer Vorteil besteht in der Tatsache, dass ein verstärkter Dachhaken eine Verringerung der tatsächlich benötigten Dachhaken (Stückzahlen) pro Solaranlagenmodul zur Folge hat, wodurch die Gesamtkosten weiter gesenkt werden können.

Beispielsweise kann der Dachhaken einstückig ausgebildet sein. Einstückig bedeutet hierbei, dass alle Bestandteile des Dachhakens (also gegebenenfalls Befestigungsabschnitt, Halteabschnitt, Übergangsabschnitt usw.) aus einem gleichen Materialabschnitt bestehen oder unlösbar beispielsweise als Schweißkonstruktion miteinander verbunden sind. Es muss sich bei dem Dachhaken also nicht zwingend um eine Schweißkonstruktion handeln, sondern eine Versteifung ist auch bei einem aus einem Stück bestehenden bzw. hergestellten Dachhaken aus Bau und/oder Edelstahl möglich.

Auch hier spielt die letztliche Außenkontur des Dachhakens bzw. die Form und/oder Ausgestaltung der einzelnen Bestandsteile eine erfindungsgemäß untergeordnete Rolle.

Eine andere Ausführungsform sieht vor, dass der Dachhaken mehrteilig ausgebildet sein kann, wobei die einzelnen Bestandsteile des Dachhakens beispielsweise mittels Schraubelementen (Schrauben, Muttern usw.) lösbar miteinander verbunden sind.

Eine weitere Ausführungsform sieht vor, dass der Dachhaken verstellbar ausgebildet ist, dergestalt, dass zumindest der Befestigungsabschnitt relativ zum Halteabschnitt bewegbar sein kann. Der Halteabschnitt kann hierbei beispielsweise auch durch einen Bereich des Übergangsabschnitts definiert werden. Der Halteabschnitt kann jedoch auch als Öse, Klammer, winkelartig oder dergleichen ausgebildet sein, um nur eine kleine Auswahl zu nennen.

Das oder die Versteifungselemente können beispielsweise am und/oder im Bereich des Befestigungsabschnitts und/oder des Übergangsabschnitts und/oder des Halteabschnitts vorgesehen sein.

Bevorzugt, jedoch keinesfalls zwingend, kann das zumindest eine Versteifungselement beispielsweise in oder an einem Eck-, Biege- oder Belastungsbereich des Dachhakens vorgesehen sein. Grundsätzlich kann es sich bei den Belastungsbereichen beispielsweise um die Verbindungsbereiche (Schweißstellen) der einzelnen Bestandsteile zueinander handeln bzw. bei längeren oder abgewinkelten Bestandsteilen um zu versteifende Längsoder Eckbereiche.

Bevorzugt besteht der Dachhaken und/oder das Versteifungselement aus einem leicht schweißbaren Material, insbesondere aus Bau- und/oder Edelstahl. Bevorzugt jedoch keinesfalls zwingend, besteht das Versteifungselement aus dem gleichen Material wie der Dachhaken.

Eine weitere Ausführungsform sieht vor, dass Bereiche des Befestigungsabschnitts und/oder des Übergangsabschnitts und/oder des Halteabschnitts im Querschnitt gewölbt und/oder gekröpft und/oder gebogen ausgebildet sein können. Die Ausgestaltung der Versteifungselemente passt sich dabei bevorzugt der Form bzw. Ausgestaltung der einzelnen Bestandsteile des Dachhakens an. Die letztendliche Ausgestaltung der einzelnen Bestandsteile des Dachhakens spielt erfindungsgemäß jedoch eine untergeordnete Rolle, da die zu realisierende Versteifung des Dachhakens unabhängig von der Ausgestaltung der einzelnen Bestandsteile erreicht wird.

Beispielsweise kann vorgesehen sein, dass am Befestigungsabschnitt zumindest eine Durchgangsöffnung, insbesondere ein Rund- oder Langloch, zum Durchtritt einer Befestigungsschraube vorgesehen ist. Es ist auch denkbar, dass an dieser Stelle ein Gewindeloch mit eingedrehter Schraube für eine zu befestigende Schiene vorgesehen ist bzw. wo Einpressmuttern zur Schraubenaufnahme eingepresst sind. Über diese Durchgangsöffnung kann der Dachhaken an einem Dachelement, beispielsweise einem Dachsparren oder einer Dachlatte oder ähnlichem Dachunterkonstruktionsteil, befestigt werden.

Beispielsweise kann vorgesehen sein, dass am Halteabschnitt zumindest eine Ausnehmung, bevorzugt in der Art eines Langlochs, vorgesehen ist, wobei die Ausnehmung dem Durchtritt eines Befestigungselements dient. Am nahezu beliebig ausgebildeten Halteabschnitt kann mittel- oder unmittelbar (beispielsweise in Verbindung mit weiteren Tragschienen, wie immer auch gearteten Befestigungsmodulen, Klammern etc.) das Solaranlagenmodul befestigt werden.

Beispielsweise kann die Ausnehmung mittels eines Stanz-, Laser- oder anders geartetes Schneidverfahrens, zur Erreichung der gewünschten Ausnehmung, hergestellt werden.

Je nach den bau- oder kundenseitig vorgesehenen bzw. bestehenden Ausführungen der Dachhaken, können dabei beliebig viele und verschieden ausgebildete Versteifungselemente zum Einsatz kommen.

Ausführungsbeispiele der Erfindung werden in den Zeichnungen dargestellt und im Nachfolgenden näher beschrieben.

Es zeigen:
- Fig. 1: zeigt ein erstes Ausführungsbeispiel eines Dachhakens mit Versteifungselementen in Draufsicht;
- Fig. 2: zeigt den Dachhaken gem. Fig. 1 in einer ersten Seitenansicht;
- Fig. 3: zeigt den Dachhaken gem. Fig. 1 und 2 in einer weiteren Seitenansicht;
- Fig. 4: zeigt ein zweites Ausführungsbeispiel eines Dachhakens mit Versteifungselementen in Draufsicht;
- Fig. 5: zeigt den Dachhaken gem. Fig. 4 in einer ersten Seitenansicht;
- Fig. 6: zeigt den Dachhaken gem. Fig. 4 und 5 in einer weiteren Seitenansicht;
- Fig. 7: zeigt ein drittes Ausführungsbeispiel eines Dachhakens mit Versteifungselementen in Draufsicht;
- Fig. 8: zeigt den Dachhaken gem. Fig. 7 in einer ersten Seitenansicht;
- Fig. 9: zeigt den Dachhaken gem. Fig. 7 und 8 in einer weiteren Seitenansicht;
- Fig. 10: zeigt ein viertes Ausführungsbeispiel eines Dachhakens mit Versteifungselementen in Draufsicht;
- Fig. 11: zeigt den Dachhaken gem. Fig. 10 in einer ersten Seitenansicht;
- Fig. 12: zeigt den Dachhaken gem. Fig. 10 und 11 in einer weiteren Seitenansicht.

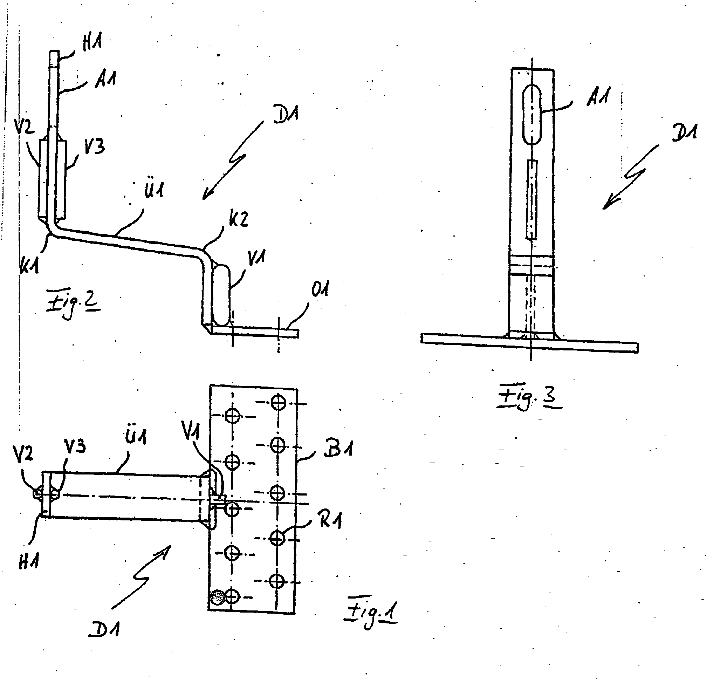

Fig. 1 zeigt ein erstes Ausführungsbeispiel eines Dachhakens D1 mit den Versteifungselementen V1, V2 und V3 in Draufsicht. Der Dachhaken D1 besteht im Wesentlichen aus einem Befestigungsabschnitt B1, einem Übergangsabschnitt Ü1 und einem Halteabschnitt H1. Im Befestigungsabschnitt B1 sind eine Vielzahl von Durchgangsöffnungen, hier in der Art von Rundlöchern R1, vorgesehen, die dem Durchtritt von Befestigungsschrauben dienen. Die Versteifungselemente V1, V2 und V3 sind mit dem Dachhaken D1 verschweißt, wobei auch der Dachhaken D1 selbst als Schweißkonstruktion ausgebildet ist.

Das Versteifungselement V1 weist einen rechteckigen Querschnitt auf, während die Versteifungselemente V2 und V3 einen runden Querschnitt aufweisen.

Fig. 2 zeigt den Dachhaken D1 in einer ersten Seitenansicht. Zu erkennen ist, dass der Halteabschnitt H1 und der Übergangsabschnitt Ü1 aus einem gemeinsamen Materialabschnitt bestehen. Der Übergangsabschnitt Ü1 wurde mittels Schweißverfahren am Befestigungsabschnitt B1 befestigt. Der Übergangsabschnitt Ü1 weist zwei Biegekanten K1 und K2 auf, an deren weiteren Verlauf sich jeweils der Halteabschnitt H1 bzw. der Befestigungsabschnitt B1 anschließen.

Der Halteabschnitt H1 ist mit einer Ausnehmung A1 versehen, wobei das bei der Herstellung der Ausnehmung A1 entstandene Restmaterialstück das Versteifungselement V1 bildet (Vergleiche auch Ausnehmung A1 in Fig. 3). Unterhalb der Ausnehmung A1 sind die Versteifungselemente V2 und V3 angeordnet. Die Versteifungselemente V2 und V3 erstrecken sich im Wesentlichen vom einen Ende der Ausnehmung A1 bis zur ersten Biegekante K1. Das Versteifungselement V1 erstreckt sich im Wesentlichen von der Oberfläche 01 des Befestigungsabschnitts B1 bis zur zweiten Biegekante K2 des Übergangsabschnitts Ü1.

Das Versteifungselement V1 bewirkt eine erhebliche Versteifung der Winkellage des Befestigungsabschnitts B1 zum Übergangsabschnitt Ü1. Die Versteifungselemente V2 und V3 hingegen versteifen den länglichen Halteabschnitt H1 im Bereich vornehmlich unterhalb der Ausnehmung A1.

Fig. 3 zeigt den Dachhaken D1 in einer nochmals geänderten Seitenansicht.

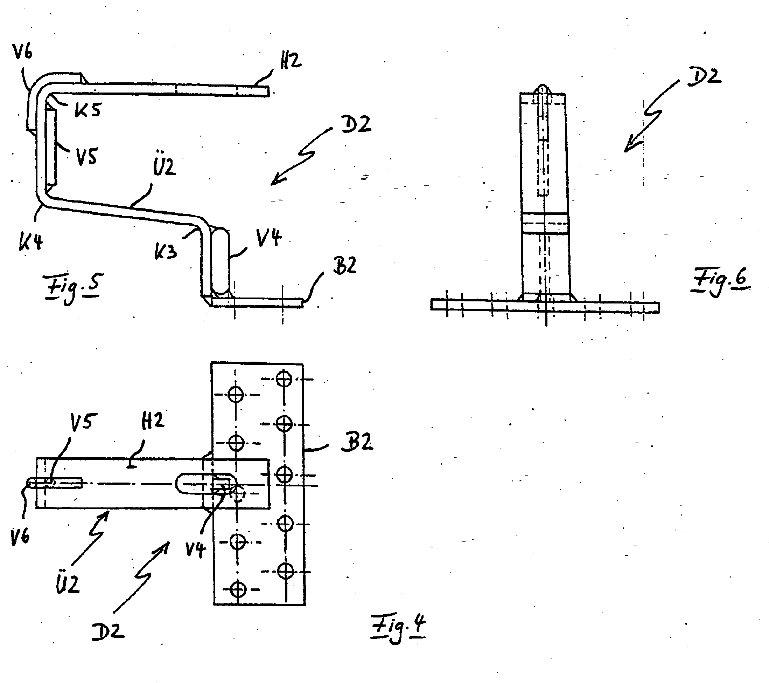

Fig. 4 zeigt ein zweites Ausführungsbeispiel eines Dachhakens D2 mit den Versteifungselementen V4, V5 und V6 in Draufsicht. Der Dachhaken D2 weist einen Befestigungsabschnitt B2, einen Übergangsabschnitt Ü2 sowie einen Halteabschnitt H2 auf.

Fig. 5 zeigt den Dachhaken D2 in einer ersten Seitenansicht. Der Übergangsabschnitt Ü2, an den sich der Halteabschnitt H2 anschließt, weist drei Biegekanten K3, K4 und K5 auf. Die Anordnung bzw. Ausgestaltung des Versteifungselements V4 entspricht im Wesentlichen der Anordnung bzw. Ausgestaltung des Versteifungselements V1 des Dachhakens D1.

Das Versteifungselement V5 ist innenliegend gerade am Übergangsabschnitt Ü2 angeordnet, während sich das Versteifungselement V6 gebogen über die Biegekante K5 erstreckt. Die Versteifungselemente V5 und V6 bewirken somit im Wesentlichen eine Versteifung des Biegekantenbereichs K5 im Hinblick auf eine Parallellage des Halteabschnitts H2 bezüglich des Befestigungsabschnitts B2.

Fig. 6 zeigt den Dachhaken D2 in einer nochmals geänderten Seitenansicht.

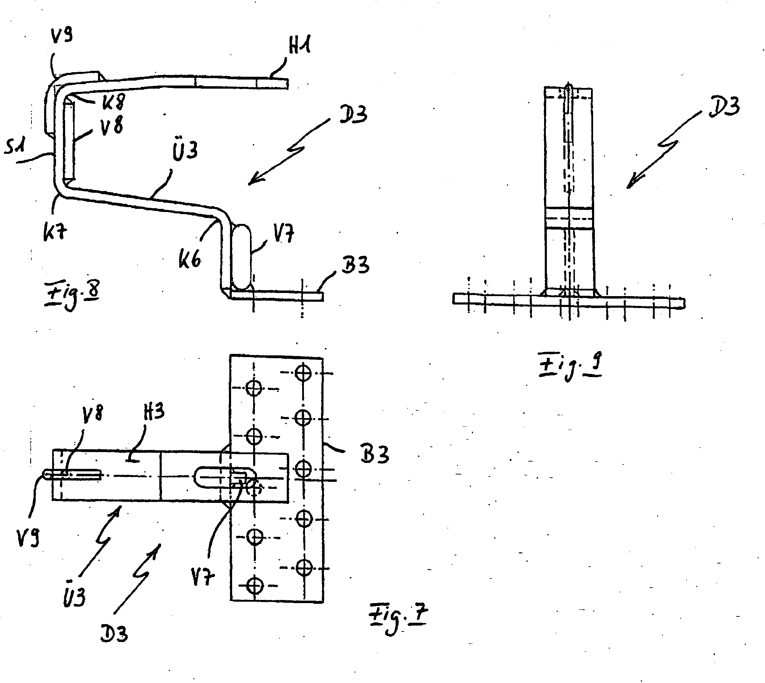

Fig. 7 zeigt ein drittes Ausführungsbeispiel eines Dachhakens D3 mit den Versteifungselementen V7, V8 und V9 in Draufsicht. Der Dachhaken D3 weist einen Befestigungsabschnitt B3, einen Übergangsabschnitt Ü3 sowie einen Halteabschnitt H3 auf.

Fig. 8 zeigt den Dachhaken D3 in einer ersten Seitenansicht. Der Übergangsabschnitt Ü3, an den sich der Halteabschnitt H3 anschließt, weist drei Biegekanten K6, K7 und K8 auf. Die Anordnung bzw. Ausgestaltung des Versteifungselements V7 entspricht im Wesentlichen der Anordnung bzw. Ausgestaltung der Versteifungselemente V1 und V4 der Dachhaken D1 und D2.

Die Ausgestaltung des Dachhakens D3 bzw. die Anordnung und Ausgestaltung der Versteifungselemente V7, V8 und V9 entspricht im Wesentlichen der Ausgestaltung des Dachhakens D2, wobei der Halteabschnitt H3 des Dachhakens D3 hier leicht abgewinkelt bzw. gekröpft ausgebildet ist.

Das Versteifungselement V8 erstreckt sich innenliegend im Wesentlichen über die gesamte Schenkellänge S1 zwischen den Biegekanten K7 und K8.

Fig. 9 zeigt den Dachhaken D3 in einer nochmals geänderten Seitenansicht.

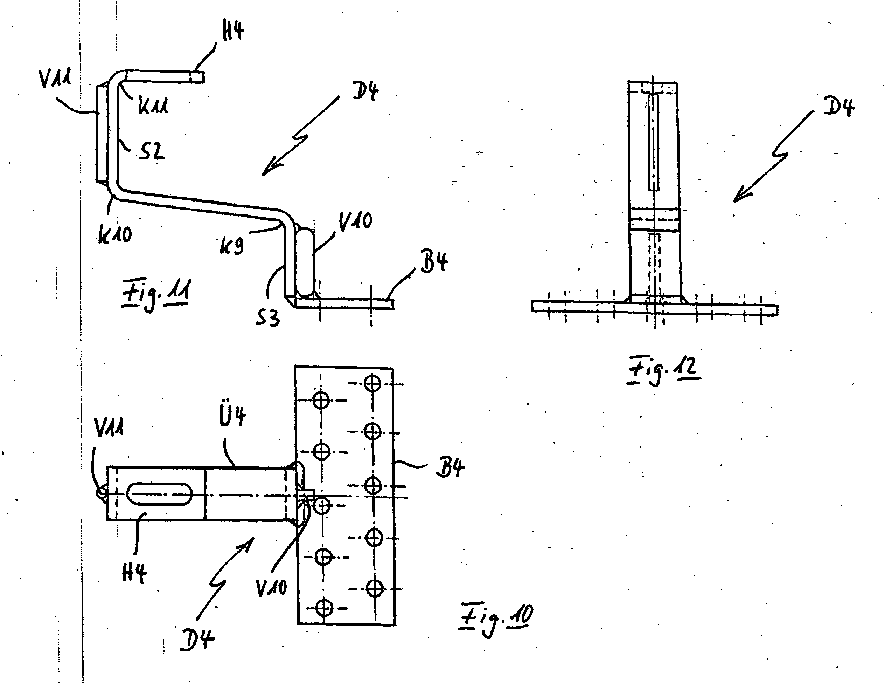

Fig. 10 zeigt ein viertes Ausführungsbeispiel eines Dachhakens D4 mit den Versteifungselementen V10 und V11 in Draufsicht. Der Dachhaken D4 weist einen Befestigungsabschnitt B4, einen Übergangsabschnitt Ü4 sowie einen Halteabschnitt H4 auf.

Fig. 11 zeigt den Dachhaken D4 in einer ersten Seitenansicht. Der Übergangsabschnitt Ü4, an den sich der Halteabschnitt H4 anschließt, weist drei Biegekanten K9, K10 und K11 auf. Die Anordnung bzw. Ausgestaltung des Versteifungselements V10 entspricht im Wesentlichen der Anordnung bzw. Ausgestaltung der Versteifungselemente V1, V4 und V7 der Dachhaken D1, D2 und D3.

Der Dachhaken D4 weist einen verkürzten Halteabschnitt H4 auf. Das Versteifungselement V11 versteift den Schenkelabschnitt S2 zwischen der Biegekante K10 und K11.

Das Versteifungselement V10 unterstützt bzw. versteift die Winkellage des Befestigungsabschnitts B4 im Hinblick auf den Schenkelabschnitt S3 des Übergangsabschnitts Ü4.

Fig. 12 zeigt den Dachhaken D4 in einer nochmals geänderten Seitenansicht.

## Patentansprüche

1. Verfahren zur Herstellung eines Dachhakens (D1, D2, D3, D4) aus Bau-und/oder Edelstahl, wobei der Dachhaken (D1, D2, D3, D4) hinsichtlich seiner räumlich-körperlichen Gestaltungsmerkmale zur Befestigung von Solaranlagenmodulen auf Dächern ausgelegt wird,
wobei der Dachhaken (D1, D2, D3, D4) zumindest aus einem Befestigungsabschnitt (B1, B2, B3, B4) und einem Halteabschnitt (H1, H2, H3, H4) zusammengesetzt wird,
von welchen der Befestigungsabschnitt (B1, B2, B3, B4) zur mittel- oder unmittelbaren Befestigung des Dachhakens (D1, D2, D3, D4) an zumindest einem Dachelement und der Halteabschnitt (H1, H2, H3, H4) zur mittel- oder unmittelbaren Befestigung des Solaranlagenmoduls dient, und
wobei am Dachhaken (D1, D2, D3, D4) zumindest ein Versteifungselement (V1, ....V11) vorgesehen wird, welches durch ein bei der Herstellung einer Ausnehmung (A1) und/oder eines der Bestandteile des Dachhakens (D1, D2, D3, D4) entstandenes Restmaterialstück gebildet wurde und unlösbar mittels Schweissverfahren mit dem Dachhaken (D1, D2, D3, D4) verbunden wird.

2. Dachhaken (D1, D2, D3, D4) aus Bau- und/oder Edelstahl, wobei der Dachhaken (D1, D2, D3, D4) hinsichtlich seiner räumlich-körperlichen Gestaltungsmerkmale zur Befestigung von Solaranlagenmodulen auf Dächern ausgelegt ist,
wobei der Dachhaken (D1, D2, D3, D4) zumindest aus einem Befestigungsabschnitt (B1, B2, B3, B4) und einem Halteabschnitt (H1, H2, H3, H4) besteht,
wobei der Befestigungsabschnitt (B1, B2, B3, B4) zur mittel- oder unmittelbaren Befestigung des Dachhakens (D1, D2, D3, D4) an zumindest einem Dachelement und der Halteabschnitt (H1, H2, H3, H4) zur mittel- oder unmittelbaren Befestigung des Solaranlagenmoduls dient,
wobei am Halteabschnitt (H1, H2, H3, H4) zumindest eine Ausnehmung (A1), bevorzugt in der Art eines Langlochs, vorgesehen ist, wobei die Ausnehmung (A1) dem Durchtritt eines Befestigungselements dient,
wobei am Dachhaken (D1, D2, D3, D4) zumindest ein Versteifungselement (V1, ....V11) vorgesehen ist, welches unlösbar mittels Schweissverfahren mit dem Dachhaken (D1, D2, D3, D4) verbunden ist,
**dadurch gekennzeichnet, dass** das Versteifungselement (V1, V4, V7, V10) durch das bei der Herstellung der Ausnehmung (A1) entstandene Restmaterialstück gebildet ist.

3. Dachhaken nach Anspruch 2 ferner umfassend einen Übergangsabschnitt (Ü1, Ü2, Ü3, Ü4).

4. Dachhaken nach Anspruch 2 oder 3, **dadurch gekennzeichnet, dass** das Versteifungselement (V1, ....V11) in der Art einer Rippe, eines Steges oder einer Verstrebung oder dergleichen ausgebildet ist.

5. Dachhaken nach einem der Ansprüche 2 bis 4, **dadurch gekennzeichnet, dass** der Dachhaken als Schweißkonstruktion ausgebildet ist.

6. Dachhaken nach einem der Ansprüche 2 bis 5, **dadurch gekennzeichnet, dass** der Dachhaken (D1, D2, D3, D4) einstückig ausgebildet ist.

7. Dachhaken nach einem der Ansprüche 2 bis 5, **dadurch gekennzeichnet, dass** der Dachhaken mehrteilig ausgebildet ist.

8. Dachhaken nach einem der Ansprüche 2 bis 7, **dadurch gekennzeichnet, dass** der Dachhaken verstellbar ausgebildet ist, dergestalt, dass zumindest der Befestigungsabschnitt relativ zum Halteabschnitt bewegbar ist.

9. Dachhaken nach einem der Ansprüche 2 bis 8, **dadurch gekennzeichnet, dass** das Versteifungselement (V1, ....V11) am und/oder im Bereich des Befestigungsabschnitt (B1, B2, B3, B4) und/oder des Übergangsabschnitts (Ü1, Ü2, Ü3, Ü4) und/oder des Halteabschnitts (H1, H2, H3, H4) vorgesehen ist.

10. Dachhaken nach einem der Ansprüche 2 bis 9, **dadurch gekennzeichnet, dass** das zumindest eine Versteifungselement (V1, ....V11) bevorzugt in oder an einem Eck-, Biege- oder Belastungsbereich (K1, ....K11) des Dachhakens (D1, D2, D3, D4) vorgesehen ist.

11. Dachhaken nach einem der Ansprüche 2 bis 10, **dadurch gekennzeichnet, dass** am Befestigungsabschnitt (B1, B2, B3, B4) zumindest eine Durchgangsöffnung, insbesondere ein Rund- oder Langloch (R1), zum Durchtritt einer Befestigungsschraube vorgesehen ist.

## Claims

1. Method for manufacturing a roof hook (D1, D2, D3, D4) from structural and/or stainless steel, wherein the roof hook (D1, D2, D3, D4) is designed in terms of its spatial-physical structural features for the attachment of solar installation modules to roofs,
wherein the roof hook (D1, D2, D3, D4) is composed at least of an attachment portion (B1, B2, B3, B4) and a holding portion (H1, H2, H3, H4),
of which the attachment portion (B1, B2, B3, B4) serves for direct or indirect attachment of the roof hook (D1, D2, D3, D4) to at least one roof element and the holding portion (H1, H2, H3, H4) serves for direct or indirect attachment of the solar installation module, and
wherein at least one stiffening element (V1, ....V11) is provided on the roof hook (D1, D2, D3, D4), this stiffening element having been formed by a residual material piece produced during the production of an aperture (A1) and/or of one of the components of the roof hook (D1, D2, D3, D4) and being non-releasably connected to the roof hook (D1, D2, D3, D4) by means of a welding process.

2. Roof hook (D1, D2, D3, D4) made from structural and/or stainless steel, wherein the roof hook (D1, D2, D3, D4) is designed in terms of its spatial-physical structural features for attachment of solar installation modules to roofs,
wherein the roof hook (D1, D2, D3, D4) consists at least of an attachment portion (B1, B2, B3, B4) and of a holding portion (H1, H2, H3, H4),
wherein the attachment portion (B1, B2, B3, B4) serves for direct or indirect attachment of the roof hook (D1, D2, D3, D4) to at least one roof element and the holding portion (H1, H2, H3, H4) serves for direct or indirect attachment of the solar installation module,
wherein at least one aperture (A1), preferably in the form of an elongate hole, is provided on the holding portion (H1, H2, H3, H4), wherein the aperture (A1) serves for passage of an attachment element,
wherein at least one stiffening element (V1, ....V11) is provided on the roof hook (D1, D2, D3, D4), this stiffening element being non-releasably connected to the roof hook (D1, D2, D3, D4) by means of a welding process,
**characterised in that** the stiffening element (V1, V4, V7, V10) is formed by the residual material piece produced during the production of the aperture (A1).

3. Roof hook as claimed in claim 2, further comprising a transition portion (Ü1, Ü2, Ü3, Ü4).

4. Roof hook as claimed in claim 2 or 3, **characterised in that** the stiffening element (V1, ....V11) is in the form of a rib, a web or a strut or the like.

5. Roof hook as claimed in any one of claims 2 to 4, **characterised in that** the roof hook is formed as a welded construction.

6. Roof hook as claimed in any one of claims 2 to 5, **characterised in that** the roof hook (D1, D2, D3, D4) is formed as one piece.

7. Roof hook as claimed in any one of claims 2 to 5, **characterised in that** the roof hook is formed from multiple parts.

8. Roof hook as claimed in any one of claims 2 to 7, **characterised in that** the roof hook is formed to be adjustable such that at least the attachment portion can be moved relative to the holding portion.

9. Roof hook as claimed in any one of claims 2 to 8, **characterised in that** the stiffening element (V1, ....V11) is provided on and/or in the region of the attachment portion (B1, B2, B3, B4) and/or of the transition portion (Ü1, Ü2, Ü3, Ü4) and/or of the holding portion (H1, H2, H3, H4).

10. Roof hook as claimed in any one of claims 2 to 9, **characterised in that** the at least one stiffening element (V1, ....V11) is provided preferably in or at a corner region, bending region or loading region (K1, .... K11) of the roof hook (D1, D2, D3, D4).

11. Roof hook as claimed in any one of claims 2 to 10, **characterised in that** at least one through-opening, in particular a round or elongate hole (R1), for passage of an attachment screw is provided on the attachment portion (B1, B2, B3, B4).

## Revendications

1. Procédé de réalisation d'un crochet de toit (D1, D2, D3, D4) en acier de construction et/ou en acier inoxydable, le crochet de toit (D1, D2, D3, D4) étant configuré, en ce qui concerne ses caractéristiques de réalisation matérielle-spatiale, pour fixer des modules d'installation solaire sur des toits,
dans lequel le crochet de toit (D1, D2, D3, D4) est assemblé au moins d'une portion de fixation (B1, B2, B3, B4) et d'une portion de maintien (H1, H2, H3, H4),
dont la portion de fixation (B1, B2, B3, B4) sert à la fixation directe ou indirecte du crochet de toit (D1, D2, D3, D4) à au moins un élément de toit et la portion de maintien (H1, H2, H3, H4) sert à la fixation directe ou indirecte du module d'installation solaire, et
dans lequel au moins un élément de renforcement (V1, ... V11) est prévu sur le crochet de toit (D1, D2, D3, D4), qui a été formé par une pièce de matériau résiduel provenant de la réalisation d'un évidement (A1) et/ou d'un des éléments du crochet de toit (D1, D2, D3, D4) et est relié de manière fixe au moyen d'un procédé de soudage au crochet de toit (D1, D2, D3, D4).

2. Crochet de toit (D1, D2, D3, D4) en acier de construction et/ou en acier inoxydable, le crochet de toit (D1, D2, D3, D4) étant configuré, en ce qui concerne ses caractéristiques de réalisation matérielle-spatiale, pour fixer des modules d'installation solaire sur des toits,
dans lequel le crochet de toit (D1, D2, D3, D4) est constitué au moins d'une portion de fixation (B1, B2, B3, B4) et d'une portion de maintien (H1, H2, H3, H4), dans lequel la portion de fixation (B1, B2, B3, B4) sert à la fixation directe ou indirecte du crochet de toit (D1, D2, D3, D4) à au moins un élément de toit et la portion de maintien (H1, H2, H3, H4) sert à la fixation directe ou indirecte du module d'installation solaire, dans lequel au moins un évidement (A1), préférentiellement sous la forme d'un trou oblong, est prévu sur la portion de maintien (H1, H2, H3, H4), l'évidement (A1) servant au passage d'un élément de fixation,
dans lequel au moins un élément de renforcement (V1, ... V11) est prévu sur le crochet de toit (D1, D2, D3, D4), qui est relié de manière fixe au moyen d'un procédé de soudage au crochet de toit (D1, D2, D3, D4), **caractérisé par le fait que** l'élément de renforcement (V1, V4, V7, V10) est formé par la pièce de matériau résiduel provenant de la réalisation de l'évidement (A1).

3. Crochet de toit selon la revendication 2 comprenant en outre une portion de transition (Ü1, Ü2, Ü3, Ü4).

4. Crochet de toit selon la revendication 2 ou 3, **caractérisé par le fait que** l'élément de renforcement (V1, ... V11) est réalisé sous la forme d'une nervure, d'une âme ou d'un entretoisement ou similaire.

5. Crochet de toit selon l'une des revendications 2 à 4, **caractérisé par le fait que** le crochet de toit est réalisé sous la forme d'une construction soudée.

6. Crochet de toit selon l'une des revendications 2 à 5, **caractérisé par le fait que** le crochet de toit (D1, D2, D3, D4) est réalisé d'une seule pièce.

7. Crochet de toit selon l'une des revendications 2 à 5, **caractérisé par le fait que** le crochet de toit est réalisé en plusieurs parties.

8. Crochet de toit selon l'une des revendications 2 à 7, **caractérisé par le fait que** le crochet de toit est réalisé réglable, de telle sorte qu'au moins la portion de fixation est mobile par rapport à la portion de maintien.

9. Crochet de toit selon l'une des revendications 2 à 8, **caractérisé par le fait que** l'élément de renforcement (V1, .... V11) est prévu sur et/ou au niveau de la portion de fixation (B1, B2, B3, B4) et/ou de la portion de transition (Ü1, Ü2, Ü3, Ü4) et/ou de la portion de maintien (H1, H2, H3, H4).

10. Crochet de toit selon l'une des revendications 2 à 9, **caractérisé par le fait que** l'au moins un élément de renforcement (V1, .... V11) est prévu préférentiellement dans ou sur une zone de coin, de flexion ou de charge (K1, .... K11) du crochet de toit (D1, D2, D3, D4).

11. Crochet de toit selon l'une des revendications 2 à 10, **caractérisé par le fait qu'**au moins une ouverture de passage, en particulier un trou rond ou oblong (R1), est prévu sur la portion de fixation (B1, B2, B3, B4) pour le passage d'une vis de fixation.
